# EUROPÄISCHE PATENTSCHRIFT

(11) **EP 0 794 136 B1**
(45) Veröffentlichungstag und Bekanntmachung des Hinweises auf die Patenterteilung: **22.05.2002**
(21) Anmeldenummer: 97102994.7
(22) Anmeldetag: 25.02.1997
(51) Int. Cl.: B65G 27/22, B65G 27/24, B06B 1/04, B06B 1/20

(54) **Resonanzschwingförderer**
Vibrator conveyor using resonant frequency
Convoyeur vibratoire utilisant la fréquence de résonance

(30) Priorität: 08.03.1996 DE 19609039
(43) Veröffentlichungstag der Anmeldung: 10.09.1997
(73) Patentinhaber: NETTER GMBH, D-55252 Mainz-Kastel (DE)
(72) Erfinder: Kröger, Dietrich, 65207 Wiesbaden (DE)
(74) Vertreter: Fuchs Mehler Weiss & Fritzsche

(56) Entgegenhaltungen:
- CH-A- 443 002
- DE-A- 2 247 149
- DE-B- 1 107 001
- DE-C- 470 098
- DE-U- 1 993 476
- US-A- 2 868 357
- PATENT ABSTRACTS OF JAPAN vol. 14, no. 57 (C-684), 2.Februar 1990 & JP 01 284372 A (A & D CO.), 15.November 1989,

## Beschreibung

Die Erfindung betrifft einen pneumatischen Schwingantrieb für ein in Resonanz zu betreibendes Schwingsystem mit einer in Schwingung zu versetzenden Masse, die über federelastische Kopplungsmittel mit einer Gegenmasse verbunden ist, insbesondere einem ggf. auch elastisch abgestützten Fundament, mit einer Kolben-Zylindereinheit, deren einer Teil, nämlich entweder deren Kolben oder deren Zylinder mit der Masse und deren anderer Teil mit der Gegenmasse fest zu verbinden ist, in wirkungsmäßiger Parallelschaltung zu der federelastischen Kupplung zwischen Masse und Gegenmasse.

Die dem Erfindungsgegenstand zugrundeliegende Problematik tritt zwar besonders bei Schwingfördergeräten auf, ist aber auch für andere, vornehmlich im Resonanzbereich arbeitende Systeme zutreffend.

Es ist eine Vielzahl von Schwingförderern bekannt, deren elastisch gelagerten Schwing- bzw. Förderkörper durch an diesen angebrachte Vibratoren eine aufgezwungene Schwingung erteilt wird, die das auf dem Schwingförderer befindliche Fördergut in kleine Wurfbewegungen versetzt, wodurch das Fördergut auf dem Förderer weiterwandert. Insbesondere sind Schwingförderrinnen bekannt, die in eine im wesentlichen linear gerichtete Schwingung versetzt werden, deren Richtung in etwa dem Anfangswinkel einer Wurfparabel entspricht. Solche Schwingförderrinnen lagert man gerne elastisch auf Blattfedern oder Federkombinationen mit gleicher Wirkung, die rechtwinklig zu der gewünschten Schwingungsrichtung angeordnet werden und in dieser Richtung eine quasi lineare Schwingung zulassen, die von der Linearität nur durch die Kreisbogenbahn ihrer Enden abweicht, eine Abweichung, die bei einem großen Unterschied zwischen Schwingungshub und Federlänge vernachlässigt werden kann.

Als Schwingantriebe für solche Schwingförderrinnen lassen sich neben elektromagnetischen Vibratoren auch druckluftbeaufschlagte Kolbenvibratoren einsetzen. Letztere haben den Vorteil, daß sie in ihrem Schwingungsverhalten an unterschiedliche Anforderungen besser anpassbar sind.

Vom Energieaufwand her ist es am günstigsten, Schwingförderer im Resonanzbereich arbeiten zu lassen. In diesem Bereich kommt es kaum darauf an, wie groß die bewegten Massen sind, es muß lediglich die Energie ersetzt werden, die durch die Dämpfung in den Federn und das bewegte Fördergut verbraucht wird. Das Fördergut geht dabei nur mit einem Teil seines Gewichtes ein. Resonanzrinnen werden vorzugsweise als Transportrinnen eingesetzt. Von den Antriebserfordernissen her ist es jedoch nachteilig, daß die Resonanzfrequenz eines Systems von der jeweiligen Belastung mit Fördergut abhängig ist und sich entsprechend ändert. Es bereitet bei bekannten Systemen in der Praxis kaum bewältigbare Schwierigkeiten, einen Schwingantrieb auf die Resonanzfrequenz eines Systems abzustimmen. Eine sich anpassende Änderung der Erregerfrequenz während des Betriebes wäre nur mit erheblichem Aufwand erreichbar, weswegen man in der Regel von ihr Abstand genommen hat und die Schwingungsantriebe so ausgelegt hat, daß der Arbeitsbereich nennenswert entfernt vom Resonanz-Scheitelpunkt in den aufsteigenden Teil der Resonanzkurve verlegt wird. Hier kann man wenigstens noch einen Teil der Resonanzverstärkung nutzen, wobei eine Dämpfung der Amplitude bei Belastung des Systems in etwa dadurch kompensiert wird, daß sich gleichzeitig der Resonanzpunkt zu einer etwas niedrigeren Frequenz hin verschiebt und die feste Arbeitsfrequenz somit in einen Bereich höherer Amplitude zu liegen kommt.

Selbst bei dem von Haus aus flexibleren Kolbenvibrator ist die Anpassung der Frequenz an die Resonanzfrequenz eines Systems nur bedingt möglich. Bei Kolbenvibratoren ist die Kraft im wesentlichen vom Kolbendurchmesser abhängig. Frequenz und Schwingbreite ergeben sich dagegen aus dem Kolbengewicht. Je schwerer der Kolben bei gleichbleibendem Durchmesser ist, umso größer wird die Schwingbreite, und umso niedriger wird die Frequenz. Das gilt für zylindrische, wie auch abgesetzte, d.h. Differenzdruck-Kolbenvibratoren. Um das Schwingungsverhalten eines Kolbenvibrators zu verändern, ist es daher üblich, Kolben in verschiedenen Längen bei gleichem Durchmesser anzubieten, damit im gleichen Kraftbereich verschiedene Arbeitsmomente zur Verfügung stehen. Normale Kolbenvibratoren, die an ein in Schwingung zu versetzendes System angekoppelt werden, haben im allgemeinen einen kolbenstangenlosen Kolben, der sich nur innerhalb des Vibratorgehäuses hin- und herbewegt. Nun ist es auch bekannt, den Kolben einseitig mit einer aus dem Gehäuse hinausgeführten Kolbenstange zu versehen, deren einseitig die Kolbenfläche vermindernde Wirkung bereits die Ausbildung als Differenzdruck-Kolbenvibrator erforderlich macht. Diese herausgeführte Kolbenstange kann zusätzlich mit die Frequenz erniedrigenden Massen versehen werden. Eine Anpassung der Frequenz eines Kolbenvibrators an das Resonanzerfordernis des Systems wäre nur über das Absenken des Luftdruckes möglich. Dabei ändert sich jedoch die Kraft des Kolbenvibrators quadratisch mit der Frequenz, so daß sich eine derartige Maßnahme ausschließt. Üblich ist es daher bei bekannten Systemen, die Federn von Resonanzrinnen so auszulegen, daß die Resonanzfrequenz des Systems in den wirtschaftlichen Betriebsbereich eines bestimmten Vibratortyps paßt. Dies kann beispielsweise durch Änderung der Kolbenmasse geschehen.

Resonanzförderrinnen sind aber nicht nur gegen Laständerungen empfindlich. Die Eigenfrequenz hängt wesentlich auch von den Daten der verwendeten Federn und beispielsweise dem Rinnengewicht ab. Werden an der Rinne bauliche Veränderungsmaßnahmen vorgenommen, die beispielsweise das Gewicht ändert, kann es sein, daß die Rinne aus der Resonanz fällt und nicht mehr fördert. Es ist daher üblich, auch bei herkömmlichen sog. Resonanzschwingförderern bei einer Frequenz von z.B. nur 85 % der Resonanzfrequenz unterhalb von dieser zu arbeiten, damit zwar noch eine merkbare Resonanzverstärkung der Schwingbreite, beispielsweise auf das Doppelte, stattfindet, das System aber weniger empfindlich wird. Auch wenn eine in ihrer Resonanzfrequenz an sich richtig berechnete und ausgelegte Förderrinne auf einem Fundament oder Rahmen aufgestellt wird, der seinerseits schwingungsisoliert, d.h. elastisch aufgestellt ist, um möglichst wenig Schwingungen in den Untergrund zu übertragen, geht diese Fundamentmasse mit ihrer elastischen Lagerung in die Schwingungsberechnung ein, so daß allein schon hierdurch ein an sich antriebsmäßig auf Resonanz abgestimmtes System außer Resonanz fallen kann.

Der Erfindung liegt die Aufgabe zugrunde, den eingangs beschriebenen pneumatischen Schwingantrieb so weiterzubilden, daß die zuvor beschriebenen Mängel überwunden werden können. Dabei soll mit einfachen konstruktiven Mitteln erreicht werden, daß der Schwingantrieb die jeweilige Resonanzfrequenz des angetriebenen Systems quasi erkennt, in dieser Resonanzfrequenz auch bei deren Änderung mitschwingt und dem System die erforderliche Energie zur Aufrechterhaltung der Schwingung zuführt, ohne daß elektrische Erkennungen oder Steuerungen erforderlich sind.

Diese Aufgabe wird erfindungsgemäß dadurch gelöst, daß
- Kolben und Zylinder eine und nur eine mit Druckluft beaufschlagbare Zylinderkammer bilden, die durch eine Stirnseite des Kolbens, die innere Seitenwand des Zylinders und eine innere Endwand des Zylinders begrenzt ist und das dieser Stirnwand des Kolbens entgegengesetzte Ende des Kolbens mit Anschlußmitteln zur Befestigung an der Masse oder der Gegenmasse versehen ist,
   und daß
- in der inneren Seitenwand des Zylinders die Austrittsöffnung eines Druckluftzufuhranschlusses und eine Entlüftungsöffnung angeordnet sind, wobei die Austrittsöffnung des Druckluftzufuhranschlusses näher an dieser einen inneren Endwand des Zylinders liegt als die Entlüftungsöffnung, und der Kolben einen Kolbenkanal enthält, der einerseits in die der Zylinder kammer zugewandte Stirnseite des Kolbens und andererseits in die Mantelfläche des Kolbens mündet und bei Bewegung des Kolbens je nach Kolbenstellung zeitlich begrenzt mit der Austrittsöffnung des Druckluftzufuhranschlusses bzw. der Entlüftungsöffnung kommuniziert.

In weiterer Ausbildung des Erfindungsgedankens ist vorgesehen, daß die Austrittsöffnung des Druckluftzufuhrkanals und die Entlüftungsöffnung als Ringnuten bestimmter Breite in der inneren Seitenwand des Zylinders ausgebildet sind. Der erfindungsgemäße pneumatische Schwingantrieb ist vorzugsweise bei Resonanzförderrinnen anzuwenden.

Ein ähnlicher Schwingantrieb ist aus der DE-B-1 107 001, Fig. 2, bekanntgeworden. Er umfaßt ein auf einem Fundament elastisch gelagertes Gehäuse mit einem zylindrischen Hohlraum, in dem ein Kolben auf und ab bewegbar ist. Der Kolben ist über eine nach außen geführte Kolbenstange starr mit einem Schwingtisch verbunden. Zwischen Kolben und Gehäuse ist eine Rückstellfeder angeordnet, die bei der Aufwärtsbewegung des Kolbens gespannt wird. In den unteren Bereich des Hohlraums mündet eine Druckluftleitung mit Ventil und Drosselorgan. Etwa auf halber Höhe des Hohlraums ist ein Luftauslaß vorgesehen. Lufteinlaß und Luftauslaß werden bei der Auf- und Abbewegung des Kolbens periodisch freigegeben und geschlossen.

Konstruktiv und funktionell besteht ein wesentlicher Unterschied zum erfindungsgemäßen pneumatischen Schwingantrieb darin, daß beim bekannten Schwingantrieb die Druckluftzufuhr - wenn auch mit einer festen Drossel versehen - ständig in Betrieb ist und keine Mittel vorgesehen sind, um mit ihr während des Bewegungszyklus des Kolbens nur zeitlich begrenzt dem Zylinderraum Druckimpulse zuzuführen. Das führt dazu, daß der Kolben, sobald er auf seinem Weg nach unten die Entlüftungsöffnung wieder verschlossen hat, sofort wieder und zwar ständig bis über den Umkehrpunkt hinaus mit vollem Druck beaufschlagt wird, wodurch sein Durchschwingen nach unten vorzeitig abgebremst und er unmittelbar wieder zu einer Gegenbewegung nach oben veranlaßt wird. Umgekehrt wird bei der Bewegung des Kolbens nach oben nach Freigabe der Entlüftungsöffnung schlagartig der ansonsten ständig anstehende Druck weggenommen, was unmittelbar dazu führt, daß unter dem Gegendruck der Feder eine Bewegungsumkehr eingeleitet wird. Dies umso mehr, als nach der Lehre der DE-B-1 107 001 der Luftdruck soweit gedrosselt werden soll, daß bei geöffnetem Luftauslaß die Federkraft stärker ist als der Druck der einströmenden Luft (Spalte 1, Zeilen 20-24). Damit ist der maximal einstellbare Luftdruck durch die konstruktiv vorgegebene Rückstellfeder begrenzt, was u.U. zu Anfahrschwierigkeiten führen kann. Außerdem ist bei größeren schwingenden Massen die Kraft der Rückstellfeder nicht allein maßgebend. Vielmehr bestimmt gerade bei Resonanzbetrieb die Bewegungsenergie der schwingenden Masse die Kraft, mit der der Kolben auf den unteren Zylinderraum drückt. Bei dem bekannten Schwingantrieb kann daher die Energiezufuhr mittels Druckluft nur höchst unzulänglich auf betriebliche Belastungsschwankungen eingestellt werden.

Ein anderer Schwingantrieb ist aus der US-A-2 868 357 bekanntgeworden. Dabei handelt es sich um einen in einem zylindrischen Gehäuse frei schwingenden, beidseitig mit Druckluft beaufschlagbaren Kolben, der zwei innere Kanäle aufweist, die bei der Hin- und Herbewegung des Kolbens periodisch mit einem in der Bewegungsstrecke mittig angeordneten Lufteinlaß und zwei endseitig angeordneten Luftauslässen kommunizieren. Das eine Ende des Gehäuses ist über eine Feder mit einer elastisch gelagerten Förderrinne gekoppelt und das andere Ende des Gehäuses ist in einer Führung in Schwingungsrichtung längsbeweglich gelagert.

Anders als beim Gegenstand der Erfindung besteht dieses System nicht aus einer schwingenden Masse und einer Gegenmasse, die durch federelastische Mittel miteinander verbunden sind und denen ein Schwingantrieb parallel geschaltet ist, dessen eines Ende mit der Masse und dessen anderes Ende mit der Gegenmasse verbunden ist. Der bekannte Schwingantrieb ist vielmehr ein einfacher Schwingungserreger, der selbst über eine Feder mit der in Schwingung zu versetzenden Masse verbunden ist und über diese Feder Koppelschwingungen erzeugt. Der doppelseitig beaufschlagte Kolben des Schwingungserregers ist mit nichts verbunden, er führt eine vom schwingenden System je nach Druckluftbeaufschlagung vollständig unabhängige Schwingung aus. Es handelt sich bei jenem Antrieb um nichts anderes als um einen bekannten Kolbenvibrator mit intern schwingendem Kolben, bei dem allein aufgrund des Impulssatzes am Gehäuse eine Gegenschwingung zum Kolben erzeugt wird, die ihrerseits dann auf einen anderen Gegenstand übertragen wird. Der Kolben führt eine Zwangsschwingung und keine Resonanzschwingung aus.

Im folgenden wird die Erfindung am Beispiel einer Resonanzförderrinne beschrieben, obwohl, wie der Fachmann leicht erkennen kann, der Erfindung auch entsprechende andere Anwendungen zugänglich sind. Dies sind beispielsweise Vibrationstische, Siebe, Filterrahmen usw..

Wesentlich an der Erfindung ist, daß abgesehen von der entsprechenden Kopplung der einzelnen Elemente ein Schwingantrieb vorgesehen ist, dessen gegeneinander bewegte Teile im vorgesehenen Schwingungsbereich in ihren gegenseitigen Schwingungsausschlägen nicht formschlüssig, beispielsweise durch Anschlag begrenzt sind, sondern sich einer Resonanzschwingung des Systems im wesentlichen frei anpassen können, wobei es jedoch nicht ausgeschlossen ist, daß eine gewisse (progressiv) elastische Begrenzung der gegeneinander schwingenden Teile besteht. So sind die Zeitpunkte der Energiezufuhr des Antriebes nicht an die Bewegungsumkehrpunkte eines Antriebsteiles, in der Regel eines Kolbens gebunden. Die Energiezufuhr kann vielmehr irgendwann in der Beschleunigungsphase eines bewegten Antriebsteiles erfolgen, um es zum verstärkten Durchschwingen anzuregen. Es wurde festgestellt, daß das System aber auch dann bestimmungsgemäß arbeitet, wenn die Energiezufuhr sogar bereits etwas vor dem Umkehrpunkt erfolgt.

Übliche Antriebe sind u.a. pneumatisch betriebene Kolbenvibratoren. In Anwendung auf die Erfindung müssen die Kolben dieser Vibratoren jedoch in der Lage sein, der Resonanzschwingung des Systems zu folgen, ohne im Zylinder auf eine starre Begrenzung zu stoßen. Die Druckluftzufuhr in den Zylinderraum hinter dem nachlaufenden Ende des Kolbens erfolgt beispielsweise nach Freigabe einer Zutrittsöffnung während der Beschleunigungsphase des Kolbens durch den Kolben selbst.

Um die in den Schwingantrieb eingebrachte Energie, die dort in eine Schwingbewegung umgesetzt wird, möglichst unmittelbar auf das schwingende System übertragen zu können, soll die Ankoppelung des Schwingantriebes an die beiden betroffenen Massen in Richtung der Schwingungsübertragung möglichst starr sein, insoweit die Schwingung des Antriebes in Form und Richtung jedoch nicht exakt mit dem möglichen Schwingungsweg des angetriebenen Systems übereinstimmt, werden bevorzugt jedoch beispielsweise flexible oder gelenkige Stangen für die Ankopplung verwendet, die zwar in ihrer Erstreckungsrichtung relativ starr sind, eine seitliche Auslenkung beim Schwingungsablauf aber zulassen, damit der Kolben im Schwingantrieb nicht unnötig mit Querkräften belastet wird.

Eine gewisse Elastizität der Ankopplungselemente in Richtung der Schwingungsübertragung ist auch denkbar, um beispielsweise Vorsorge dafür zu treffen, daß bei großen Schwingungsausschlägen und unplanmäßigem Anschlag des Kolbens des Schwingantriebes im Gehäuse noch einen Reservefederweg für den Schwingausschlag zur Verfügung steht. Eine solche Lösung bringt aber den Nachteil mit sich, daß einerseits die Schwingungsenergie nur mit Verzögerungen auf das eigentliche System übertragen wird, weil durch eine solche elastische Ankopplung des Kolbens wiederum ein eigenes schwingfähiges System entsteht, das dazu neigt, in Resonanz zu schwingen und so den Energieübertragungsablauf unkontrolliert machen kann. Besser ist es in jedem Fall, den Schwingantrieb so auszulegen, daß der mögliche Kolbenweg die beim Betrieb auftretenden Schwingungsamplituden des Systems bewältigt.

Die durch die Elastizität einer elastischen Ankopplung mögliche Resonanzschwingung muß von höherer Frequenz sein als die der Blatt- oder sonstigen Resonanzfedern, da letztere die Resonanz bestimmen sollen. Der Antrieb erkennt jeweils die niedrigere Frequenz und schwingt in dieser.

Die Gegenmasse, an der die Schwingantriebe der Förderrinne andererseits abgestützt sind, kann ein bodenstationäres Fundament sein. In diesem Fall ist die Gegenmasse starr oder quasi starr und im wesentlichen unendlich groß, so daß sich die Resonanzfrequenz der Förderrinne vornehmlich aus ihrer eigenen Masse und der Art ihrer Federabstützung bestimmt. Die Gegenmasse kann aber auch ein Sockelrahmen der Vorrichtung sein, welcher seinerseits elastisch auf einem Fundament bzw. dem Untergrund abgestützt ist, um möglichst wenig Schwingungen in den Untergrund zu übertragen. Eine solche Anordnung verändert die Resonanzfrequenz des Systems im Gegensatz zu einer starren Abstützung. Erfindungsgemäß kann die Gegenmasse aber auch eine frei im Raum angeordnete Masse sein, die von den Federn gehalten wird, über die die eigentliche Förderrinne mit ihr verbunden ist. In einem solchen Fall ist es natürlich erforderlich, daß das Gesamtsystem irgendwo aufgehängt oder abgestützt ist. Dies kann in der Weise geschehen, daß man es an der Förderrinne beispielsweise in sehr weichen Federn aufhängt, durch die die Bewegungsfreiheitsgrade des Gesamtsystems zweckmäßigerweise möglichst wenig beschränkt sind. Ein an derart weichen Federn aufgehängtes Gesamtsystem hat insgesamt eine andere, in der Regel wesentlich niedrigere Resonanzfrequenz als diejenige des angetriebenen, isoliert betrachteten Systems aus den beiden Massen und deren gegenseitiger Federankopplung. Der Nachteil einer solchen Anordnung kann sein, daß mangels einer Abstützung der Gegenmasse die Schwingungsamplitude der eigentlichen Rinne, bezogen auf die Umgebung, erheblich reduziert wird.

Schwingförderrinnen sollen im allgemeinen bei jeder Schwingung eine Wurfbewegung des Fördergutes einleiten, so daß ihre Schwingung in Förderrichtung des Gutes gesehen schräg nach oben gerichtet ist. Ein elastischer Bewegungsfreiheitsgrad in einer solchen Richtung und möglichst starre Anordnung in anderen Richtungen wird zweckmäßigerweise durch Blattfedern erreicht, deren Erstreckung rechtwinklig zu der vorgesehenen Schwingungsrichtung verläuft. Die Enden solcher Blattfedern führen zwar keinen strikt linearen Weg aus, solang ihre Schwingungsauslenkung im Verhältnis zu ihrer Länge jedoch klein ist, kann die eigentliche Kreisbogenbewegung als quasi linear angesehen werden.

Es ist zwar nicht unbedingt erforderlich, daß die Schwingungsrichtung der Schwingantriebe mit der Richtung des Schwingungsfreiheitsgrades der Förderrinne übereinstimmt, im allgemeinen wird die Ausführung aber so vorgenommen, daß im anderen Falle nur eine bestimmte Komponente des Momentes des Schwingantriebes für die Erzeugung der Schwingung wirksam wird.

Insbesondere bei einer Förderrinne, deren elastische Ankopplung an die Gegenmasse die Schwingungsrichtung nicht zwangsbestimmt, ist es bei Anordnung nur eines Schwingantriebes erforderlich, daß seine Wirkungslinie durch den Schwerpunkt der schwingenden Masse der Rinne verläuft. Ist die Gegenmasse elastisch abgestützt, sollte die Wirkungsrichtung des Schwingantriebes auch durch ihren Schwerpunkt verlaufen. Um dies zu erreichen, ist die Masse in ihrer Gestalt entsprechend auszubilden. Auch bei in Blattfedern aufgehängten Förderrinnen ist es sinnvoll, diese Vorschrift einzuhalten. Weniger kritisch ist die Anordnung zwar, wenn mehrere Schwingantriebe vorgesehen werden, da es sich aber hier vorliegend um in Resonanz schwingende Systeme handelt, kommt man in einer Vielzahl der Fälle mit nur einem entsprechend ausgelegten Schwingantrieb aus.

Ein Schwingantrieb, der einerseits beispielsweise an einem Fundamentrahmen abgestützt ist und andererseits an einer federelastisch abgestützten Masse angreift, ist auch der herkömmliche Kurbeltrieb. Beim Kurbeltrieb sind jedoch Frequenz und Amplitude beim Betrieb vorgegeben, so daß durch den Kurbeltrieb nur eine Zwangsschwingung erzeugt werden kann. Wie weiter oben erwähnt, ist es für die Erfindung wesentlich, daß ein Schwingantrieb verwendet wird, bei dem die Lage der Bewegungsumkehrpunkte nicht festgelegt ist, damit sein mit dem System verbundener Kolben weitgehend ungehindert mit dem System mitschwingen kann, so daß seine Schwingungsamplitude wie auch seine Schwingungsfrequenz wesentlich durch das System mitbestimmt werden. Auf diese Weise übernimmt bzw. erkennt der Schwingantrieb die jeweilige Resonanzfrequenz des Gesamtsystems.

Ein hierfür geeigneter Schwingantrieb ist ein herkömmlicher Kolbenvibrator, und zwar insbesondere eine Ausführung als Differenzdruck-Vibrator, dessen eine Kolbenseite mit einer herausgeführten Kolbenstange verbunden ist, über die die Ankoppelung an das System vorgenommen werden kann. Auch wenn beim normalen wie beim Differenzdruck-Kolbenvibrator entlang des Kolbenweges die Punkte vorgegeben sind, an denen, gesteuert durch das Öffnen und Verschließen von Zutritts- bzw. Ausströmöffnungen für das Druckmedium durch den Kolben selbst, die eine Bewegungsumkehr des Kolbens einleitende Zugabe von Druckmedium jeweils beginnt, hat es sich dennoch gezeigt, daß der Vibrator durch Überschwingen dieser Punkte im wesentlichen in der Resonanzfrequenz des Systems arbeitet.

In bevorzugter Ausführungsform wird jedoch ein Kolbenvibrator verwendet, der nur einseitig, d.h. nur vor einem seiner Bewegungsumkehrpunkte mit Druckmedium beaufschlagt und etwas später entlüftet wird, welcher in Richtung auf seinen anderen Umkehrpunkt aber frei ausschwingen kann, wobei die Rückbewegung ohne Unterstützung externer Energie allein durch das rückschwingende angekoppelte System erfolgt.

Während bei zweiseitig beaufschlagten Kolbenvibratoren mit herausgeführter Kolbenstange im allgemeinen nur mit Differenzdruck gearbeitet werden kann, steht beim einseitig beaufschlagten Vibrator, bei dem zweckmäßigerweise die der Kolbenstange abgewandte Seite für die Druckbeaufschlagung ausgewählt wird, die volle Kolbenfläche für die Druckbeaufschlagung zur Verfügung. Dies hat insbesondere für das Anfahren eines in Resonanz zu betreibenden Systems einen Vorteil. Bevor beim Anfahren die Resonanzfrequenz erreicht wird, sind im allgemeinen erheblich höhere Rückstellkräfte der Federn zu überwinden. Insofern sichergestellt wird, daß sich der einseitig beaufschlagte Vibrator im Ruhezustand des Gerätes in geeigneter Anfahrposition befindet, kann das System durch volle Druckbeaufschlagung des Vibrators problemlos in Betrieb genommen werden. Da später im Betriebszustand das System selbsttätig in den Resonanzzustand übergeht, wirkt sich eine Änderung des Druckes des Betriebsmediums und somit der zugeführten Energie allein in der Weise aus, daß die Schwingungsamplitude verändert wird. Allein durch die Druckänderung läßt sich dem System die entsprechende Ergänzungsenergie zuführen. Erfindungsgemäße fluidangetriebene Vibratoren steuern nach dem Anlauf automatisch auf eine vorgewählte niedrigere Leistung um, wenn die abgeführte Luft über ein Volumen (z.B. Schlauchverbindung) über eine entsprechend eingestellte Drossel geführt wird. Das zunächst drucklose Schlauchvolumen ermöglicht volle Leistung des Antriebs beim Anlaufen. Nach Füllung des Volumens wird die Drossel wirksam.

Im folgenden wird die Erfindung unter Hinweis auf die beigefügten Zeichnungen im einzelnen noch zusätzlich erläutert:
- Fig. 1: eine in Blattfedern an einem festen Fundament schwingfähig abgestützte Resonanzförderrinne mit einem Schwingantrieb, der einerseits an der Rinne und andererseits an dem Fundament angreift;
- Fig. 2: eine mittels Blattfedern auf einem elastisch gelagerten Sockel abgestützte Resonanzförderrinne mit zwei möglichen Anordnungen des Schwingantriebes;
- Fig. 3: eine auf weichen Schraubenfedern abgestützte Resonanzförderrinne, die über Blattfedern mit einer Gegenmasse verbunden ist, wobei der Schwingantrieb an der Rinne und an dieser Gegenmasse angreift;
- Fig. 4: eine kompakte Baueinheit für eine Resonanzförderrinne nach Fig. 3, die den Schwingantrieb, die Blattfedern und die Gegenmasse umfaßt und
- Fig. 5a und b: eine schematische Darstellung eines fluidbetriebenen Kolbenvibrators als Schwingantrieb mit einseitiger Fluidbeaufschlagung, angeordnet in einem schwingenden System gemäß Fig. 1.

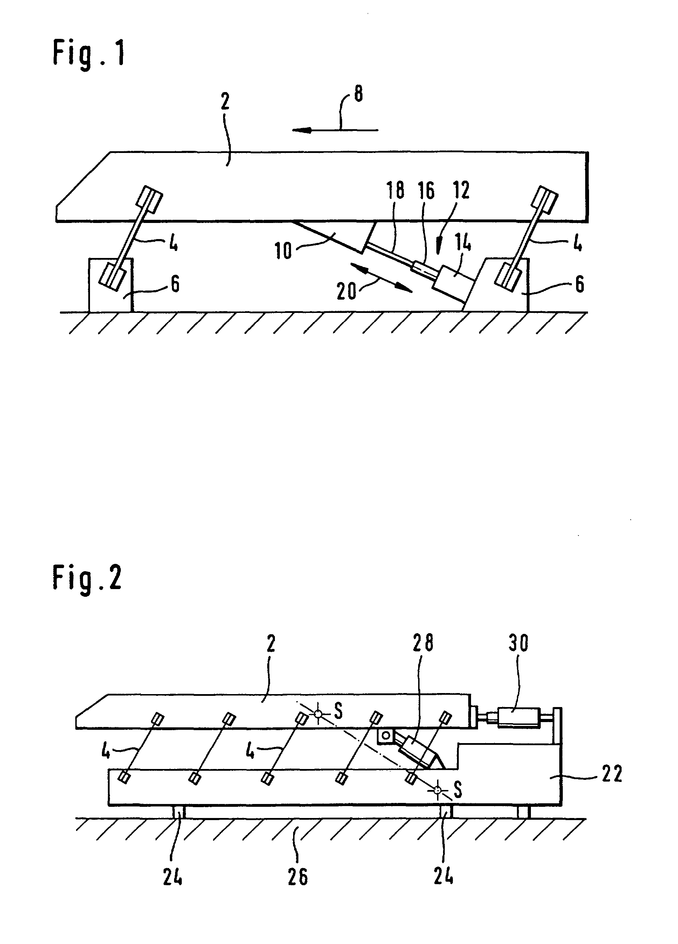

In Fig. 1 ist schematisch eine Schwingförderrinne mit einem Rinnenkörper 2 dargestellt, der über Blattfedern 4 auf zwei festen Fundamentblöcken 6 federelastisch abgestützt ist. Ein Pfeil 8 deutet die vorgesehene Förderrichtung der Rinne an. Zwischen einem unteren Ansatz 10 am Rinnenkörper und dem hinteren Fundamentblock 6 ist ein Schwingantrieb 12 angebracht. Dieser Schwingantrieb 12 weist ein Gehäuse 14 auf, mit dem er an dem hinteren Fundamentblock 6 befestigt ist. Aus der anderen Seite des Gehäuses 14 ragt eine Kolbenstange 16 hinaus, die über eine Koppelstange 18 mit dem Ansatz 10 des Rinnenkörpers 2 verbunden ist. Wird der Schwingantrieb 12, hier ein druckluftbetriebener Kolbenvibrator in Betrieb gesetzt, regt er das System zu einer Schwingung an, die durch den Doppelpfeil 20 angedeutet ist.

Fig. 2 zeigt eine Resonanzförderrinne, deren Rinnenkörper 2 ebenfalls an Blattfedern 4 federelastisch abgestützt ist, deren untere Enden jedoch mit einem Sockelblock 22 verbunden sind, der seinerseits mittels elastischer Lager 24 auf dem Untergrund 26 ruht. Es sind zwei Schwingantriebe 28 und 30 dargestellt, die einerseits am Rinnenkörper 2 und andererseits am Sockelblock 22 angreifen. Die Anordnung der Schwingantriebe 28 und 30 ist alternativ gedacht. Die Wirkungslinie des Schwingantriebes 28 verläuft dicht parallel neben der Verbindungslinie der Schwerpunkte S des Rinnenkörpers 2 und des Sockelblocks 22. Eine genaue Kongruenz zwischen der Wirkungslinie des Schwingantriebes 28 und der Verbindungslinie der Schwerpunkte S ist bei einer Anordnung mit Mehrfachblattfedern 4 nicht unbedingt erforderlich. Wird ein Antrieb in der Position des Schwingantriebes 30 vorgesehen, so verläuft seine Wirkungslinie zwar durch den Schwerpunkt S des Rinnenkörpers 2, jedoch nicht durch den Schwerpunkt des Sockelblockes 22. Da der Sockelblock sehr lang ist, werden durch diese Anordnung seine elastischen Lager 24 auf Scherung beansprucht. Eine Kippbewegung ist bei der verhältnismäßig hohen Druckfestigkeit der gummielastischen Lager 24 nicht zu befürchten.

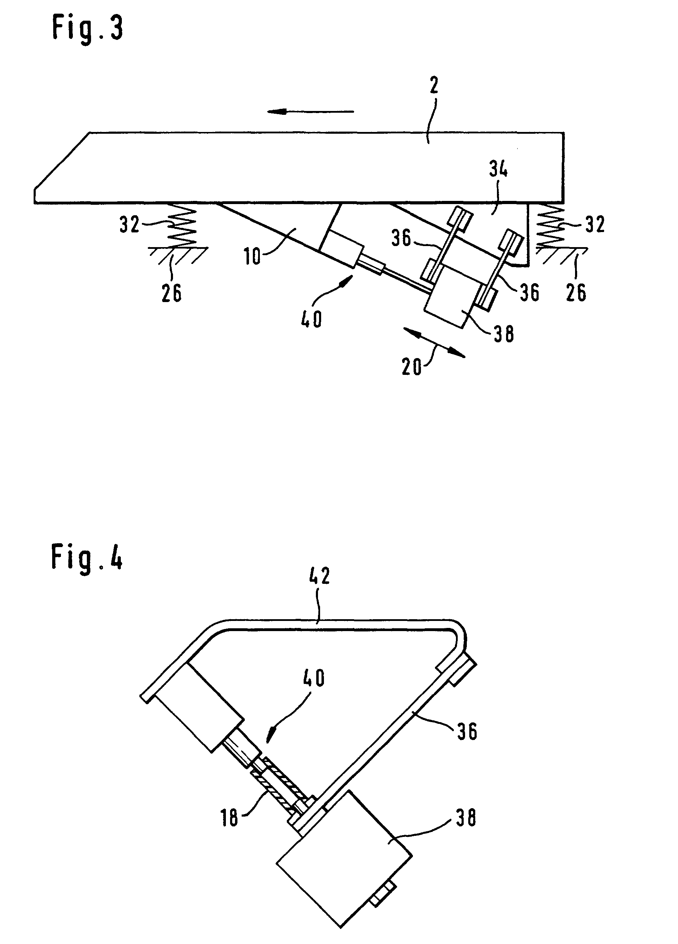

Fig. 3 zeigt eine Resonanzförderrinne, deren Rinnenkörper 2 mittels senkrecht angeordneter, verhältnismäßig weicher Schraubenfedern auf dem Untergrund 26 abgestützt ist. An einem hinteren Ansatz 34 ist der Rinnenkörper mit Blattfedern 36 versehen, die zwischen sich eine Gegenmasse 38 tragen. Ein Schwingantrieb 40 greift einerseits an einem unteren Ansatz 10 des Rinnenkörpers 2 an und andererseits an der Gegenmasse 38. Die Schwingungsrichtung ist wiederum durch den Doppelpfeil 20 angedeutet.

Fig. 4 stellt ein Kompaktsystem dar, welches fertig montiert mit einem entsprechend Fig. 3 gelagerten Rinnenkörper 2 verbunden werden kann. Es trägt an einem Rahmen 42 Blattfedern 36 und den Schwingantrieb 40. Die Enden der Blattfedern 36 sind einerseits mit dem anderen Ende des Schwingantriebes 40 und mit der Gegenmasse 38 verbunden. Die Koppelstange 18 des Schwingantriebes 40 ist als ein teilweise flexibles Kunststoffrohr ausgebildet, welches in seiner Längserstreckung jedoch knickfest ist. Da die unteren Enden der Blattfedern 30 im Schwingungszustand keinen genau linearen sondern einen Kreisbogenweg gegenüber dem Rahmen 42 beschreiben, sollen durch die flexible Koppelstange 18 Querkräfte auf den Kolben des Schwingantriebes 40 vermieden werden.

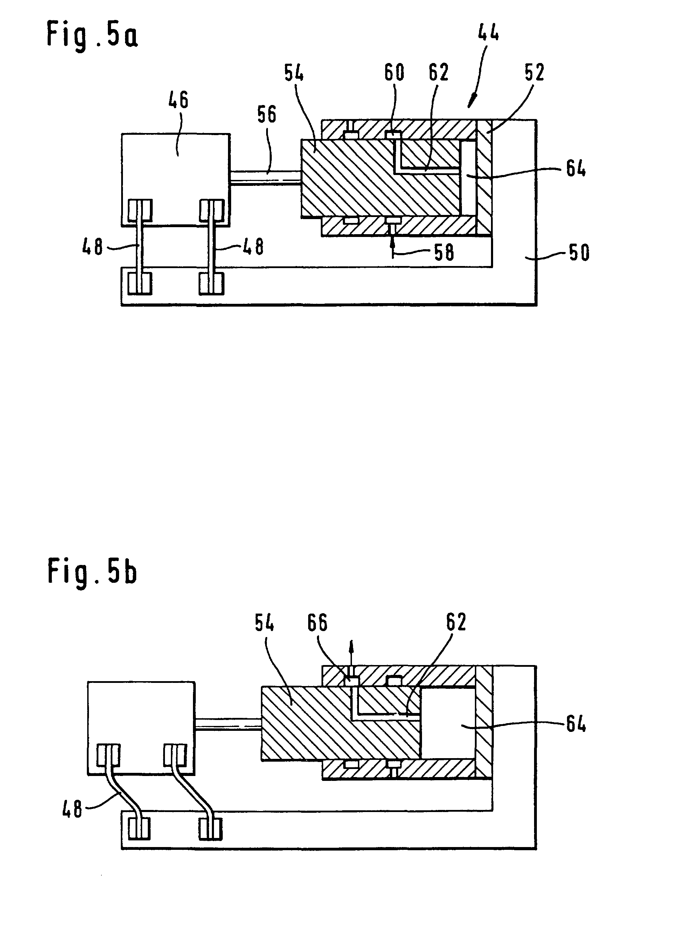

Fig. 5 a und b zeigt einen einseitig beaufschlagten Kolbenvibrator 44, der in ein schwingendes System eingebettet ist, wie es der Anordnung nach Fig. 1 entspricht. Die Masse 46 repräsentiert den Rinnenkörper 2 und ist über Blattfedern 48 an einer Gegenmasse 50 abgestützt. Der Kolbenvibrator 44 weist ein Gehäuse 52 auf, mit dem er an der Gegenmasse 50 befestigt ist, und einen linear in dem Gehäuse 52 beweglich angeordneten Kolben 54, der über eine Koppelstange 56 mit der Masse 46 verbunden ist.

Fig. 5a stellt den Inbetriebnahmezustand aus der Ruhelage des Systems dar. Über einen Druckluftzuführanschluß 58 wird Druckluft in die Ringnut 60 des Gehäuses 52 eingeleitet und gelangt über den Kolbenkanal 62 in den Zylinderraum 64. Dadurch wird der Kolben 54 nach links gedrückt, bis der Kolbenkanal 62 mit der Entlüftungsringnut 66 in Verbindung gelangt, wie dies in Fig. 5b dargestellt ist. Der Druckluftzuführanschluß ist mittlerweile durch den Kolben selbst verschlossen und der Zylinderraum 64 kann enlüften. Die Rückbewegung des Kolbens 54 erfolgt nunmehr durch die Rückstellkraft der ausgelenkten Blattfedern 48 und der Vorgang läuft erneut ab.

## Patentansprüche

1. Pneumatischer Schwingantrieb
- für ein in Resonanz zu betreibendes Schwingsystem mit einer in Schwingung zu versetzenden Masse (46), die über federelastische Kopplungsmittel (48) mit einer Gegenmasse (50) verbunden ist, insbesondere einem gegebenenfalls auch elastisch abgestützten Fundament (22),
- mit einer Kolben-Zylindereinheit (44), deren einer Teil, nämlich entweder deren Kolben (54) oder deren Zylinder (52) mit der Masse (46) und deren anderer Teil mit der Gegenmasse (50) fest zu verbinden ist, in wirkungsmäßiger Parallelschaltung zu der federelastischen Kopplung (48) zwischen Masse (46) und Gegenmasse (50), wobei
- Kolben (54) und Zylinder (52) eine und nur eine mit Druckluft beaufschlagbare Zylinderkammer (64) bilden, die durch eine Stirnseite des Kolbens (54), die innere Seitenwand des Zylinders (52) und eine innere Endwand des Zylinders (52) begrenzt ist, und das dieser Stirnwand des Kolbens (54) entgegengesetzte Ende des Kolbens mit Anschlußmitteln (56) zur Befestigung an der Masse (46) oder der Gegenmasse (50) versehen ist,
- in der inneren Seitenwand des Zylinders (52) die Austrittsöffnung (60) eines Druckluftzuführanschlusses und eine Entlüftungsöffnung (66) angeordnet sind, wobei die Austrittsöffnung (60) des Druckluftzuführanschlusses näher an dieser einen inneren Endwand des Zylinders (52) liegt als die Entlüftungsöffnung (66), und der Kolben (54) einen Kolbenkanal (62) enthält, der einerseits in die der Zylindekammer (64) zugewandte Stirnseite des Kolbens (54) und andererseits in die Mantelfläche des Kolbens (54) mündet und bei Bewegung des Kolbens (54) je nach Kolbenstellung zeitlich begrenzt mit der Austrittsöffnung (60) des Druckluftzuführanschlusses bzw. der Entlüftungsöffnung (66) kommuniziert.

2. Schwingantrieb nach Anspruch 1, **dadurch gekennzeichnet, daß** die Austrittsöffnung des Druckluftzuführkanals und die Entlüftungsöffnung als Ringnuten (60,66) bestimmter Breite in der inneren Seitenwand des Zylinders (52) ausgebildet sind.

3. Verwendung eines Schwingantriebes nach Anspruch 1 oder 2 für Resonanzförderrinnen.

## Claims

1. Pneumatic vibratory drive for a vibratory system, which is to be operated in resonance, including a mass (46) which is to be caused to vibrate and is connected via resilient coupling means (48) to a countermass (50), particularly a foundation (22), which may be elastically supported, with a piston/cylinder unit (44), one portion of which, namely either its piston (54) or its cylinder (52), is to be rigidly connected to the mass (46) and the other portion of which is to be rigidly connected to the countermass (50), in effectively a parallel connection to the resilient coupling (48) between the mass (46) and countermass (50), wherein the piston (54) and cylinder (52) define one and only one cylinder chamber (64), which may be acted on with compressed air and is defined by an end surface of the piston (54), the inner side wall of the cylinder (52) and an inner end wall of the cylinder (52) and the end, opposite to this end wall of the piston (54), of the piston is provided with connecting means (56) for connection to the mass (46) or the countermass (50), arranged in the inner side wall of the cylinder (52) are the outlet opening (60) of a compressed air supply connection and a venting opening (66), whereby the outlet opening (60) of the compressed air supply connection is situated closer to this one inner end wall of the cylinder (52) than the venting opening (66) and the piston (54) includes a piston passage (62), which opens out on the one hand in the end surface, directed towards the cylinder chamber (64), of the piston (54) and on the other hand in the wall surface of the piston (54) and, when the piston (54) moves, communicates, in dependence on the position of the piston, for a limited period of time with the outlet opening (60) of the compressed air supply connection and the venting opening (66).

2. Vibratory drive as claimed in Claim 1, **characterised in that** the outlet opening of the compressed air supply passage and the venting opening are constructed in the form of annular grooves (60, 66) of predetermined width in the inner side wall of the cylinder (52).

3. Use of a vibratory drive as claimed in Claim 1 or 2 for resonant conveyor troughs.

## Revendications

1. Commande d'oscillation pneumatique
- pour un système oscillant d'exploitation à résonance comprenant une masse (46) à déplacer en oscillation qui est reliée via un moyen de couplage à déformation (48) à une masse antagoniste (50), en particulier à une fondation (22) s'appuyant le cas échéant également de manière élastique,
- comprenant une unité (44) à piston-cylindre dont une partie, plus précisément soit le piston (54) soit le cylindre (52) doit être reliée à demeure à la masse (46) et l'autre partie doit être reliée à demeure à la masse antagoniste (50), dans un montage en parallèle, en ce qui concerne son fonctionnement, au couplage à déformation (48) entre la masse (46) et la masse antagoniste (50), dans laquelle
- le piston (54) et le cylindre (52) forment une et une seule chambre de cylindre (64) qui peut être sollicitée avec de l'air comprimé, ladite chambre étant délimitée par le côté frontal du piston (54), par la paroi latérale interne du cylindre (52) et par la paroi terminale interne du cylindre (52), l'extrémité du piston opposée à cette paroi frontale du piston (54) étant munie de moyens de raccordement (52) à des fins de fixation à la masse (46) ou à la masse antagoniste (50),
- l'ouverture d'évacuation (60) d'un raccord d'alimentation en air comprimé et une ouverture de purge (66) étant pratiquées dans la paroi latérale interne du cylindre (52), l'ouverture d'évacuation 60 du raccord d'alimentation en air comprimé étant disposée plus près de cette paroi terminale interne du cylindre (52) que l'ouverture de purge (66) et le piston (54) contenant un canal de piston (62) qui débouche d'une part dans le côté frontal du piston (54) tourné vers la chambre de cylindre (64) et d'autre part dans la surface latérale du cylindre (54) et qui entre en communication, lors du déplacement du piston (54), en fonction de la position du piston, de manière limitée dans le temps, avec l'ouverture d'évacuation (60) du raccord d'alimentation en air comprimé, respectivement avec l'ouverture de purge (66).

2. Commande d'oscillation selon la revendication 1, **caractérisée en ce que** l'ouverture d'évacuation du canal d'alimentation en air comprimé et l'ouverture de purge sont réalisées sous la forme de rainures annulaires (60, 66) de largeur déterminée dans la paroi latérale interne du cylindre (52).

3. Utilisation d'une commande d'oscillation selon la revendication 1 ou 2, pour des distributeurs vibrants à résonance.
